**Europäisches Patentamt**

**European Patent Office**

**Office européen des brevets**

(19)

(11) Veröffentlichungsnummer : **0 061 559**
**B1**

(12)

# EUROPÄISCHE PATENTSCHRIFT

(45) Veröffentlichungstag der Patentschrift :
**02.01.86**

(51) Int. Cl.⁴ : **G 01 S   7/40**

(21) Anmeldenummer : **82100077.5**

(22) Anmeldetag : **08.01.82**

(54) Prüfvorrichtung für ein Radargerät mit synthetischer Apertur.

(30) Priorität : **27.03.81 DE 3112112**

(43) Veröffentlichungstag der Anmeldung :
**06.10.82 Patentblatt 82/40**

(45) Bekanntmachung des Hinweises auf die Patenterteilung : **02.01.86 Patentblatt 86/01**

(84) Benannte Vertragsstaaten :
**FR GB IT**

(56) Entgegenhaltungen :
**DE-B- 2 523 288**
**DE-B- 2 734 154**
**GB-A- 1 085 071**
**US-A- 2 922 157**

(73) Patentinhaber : **DORNIER SYSTEM GmbH**
**Postfach 1360**
**D-7990 Friedrichshafen (DE)**

(72) Erfinder : **Gieraths, Wolfgang, Dipl.-Phys.**
**Fildenstrasse 27**
**D-7990 Friedrichshafen (DE)**

(74) Vertreter : **Landsmann, Ralf, Dipl.-Ing.**
**Kleeweg 3**
**D-7990 Friedrichshafen 1 (DE)**

**Beschreibung**

Die Erfindung betrifft eine Prüfvorrichtung für ein Radargerät mit synthetischer Apertur gemäß dem Oberbegriff des Patentanspruchs 1.

Bei der fortschreitenden Technik in der zivilen und militärischen Erderkundung bzw. Luftaufklärung, sowohl von Flugzeugen als auch von Satelliten aus, finden in zunehmendem Maße Radargeräte mit synthetischer Apertur (SAR für Synthetic Aperture Radar) Verwendung. Die Funktion derartiger SAR-Radargeräte ist an die schnelle translatorische Eigenbewegung des bzw. der Geräte bzw. seiner Träger gebunden, wie sie Flugzeuge und Satelliten darstellen. Im Prinzip verwenden diese Radargeräte für die Zuordnung von Empfangssignalen zu Bildpunkten in der Entfernungskoordinate die Laufzeiten höchstfrequenter Impulse nach Art bekannter Funkmeßgeräte. Dabei werden in Azimut- oder Flugrichtung die Dopplerverschiebungen benutzt, die die reflektierten Sendesignale durch die Relativbewegung der Radarziele erfahren.

Um derartige SAR-Radargeräte auf ihre Gesamtfunktion prüfen zu können, müßte dies jeweils zusammen mit einem Träger (Flugzeug oder Satelliten) erfolgen, weil eine Gesamtfunktionsprüfung auf einem ortsfesten Prüfstand nicht möglich ist, sofern die zugehörige Antenne(n) in den Prüfvorgang mit einbezogen werden soll. Eine solche trägerbezogene Prüfung dieser Radargeräte ist aber unrealistisch, weil der Aufwand an Technik (Einsatz der Träger) und insbesondere die dabei anfallenden Kosten nicht zu vertreten sind.

Davon ausgehend ist es Aufgabe der Erfindung, eine Prüfvorrichtung zu schaffen, mit der eine ortsfeste Teilprüfung der bzw. eines SAR-Radargerätes von nahezu gleicher Aussagekraft wie bei einer trägerbezogenen Prüfung möglich ist, wobei die Antenne(n) vom Prüfvorgang ausgeschlossen ist. Die Prüfvorrichtung sollte alle Eigenschaften der Empfangssignale eines SAR-Radargerätes elektromagnetisch nachbilden, die diese Empfangssignale im realistischen Betriebseinsatz eines SAR-Radargerätes aufweisen. Dazu sollte die Prüfvorrichtung neben dieser funktionellen Eigenschaften leicht transportabel und einfach in ihrer Handhabung sein. Außerdem sollte die Prüfvorrichtung in einer spezialisierten Form in ihrem elektrischen Aufwand und in den konstruktiven Abmessungen, sowie in ihren funktionellen Eigenschaften so reduzierbar sein, daß sie sich auch zum festen Einbau in ein SAR-Radargerät eignet.

Erfindungsgemäß wird zur Lösung der gestellten Aufgabe die Merkmale des kennzeichnenden Teiles des Patentanspruchs 1 vorgesehen. Vorteilhafte Ausgestaltungen der Erfindung ergeben sich aus den Unteransprüchen.

Der Vorteil der Erfindung besteht darin, daß damit SAR-Radargeräte am Ort ihrer Herstellung und von dort über Zwischenlagerorte bis zum Ort ihres Einbaues und Einsatzes jederzeit und wiederholt auf Funktion prüfbar sind und die für derartige Prüfzwecke üblichen und notwendigen Laborgeräte und Anlagen größeren Umfanges nicht mehr benötigt werden. Insbesondere wird durch die damit gegebene Möglichkeit einer wiederholbaren und leicht durchführbaren Funktionsprüfung eines bzw. mehrerer derartiger komplexer SAR-Radargeräte eine erhebliche Einsparung an Zeit und Kosten erzielt. In der spezialisierten Version, in der die Prüfvorrichtung als Baugruppe des Radars fest in dieses eingebaut wird und während der Flug- und Betriebsphase des Radars kurzzeitig und in gewünschten Abständen für einen Prüfzyklus einschaltbar ist, kann es die Prüfvorgänge zum Teil ersetzen, die durch Überfliegen von besonders für diesen Zweck am Boden aufgestellten, geeichten Radar-Reflektoren durchgeführt werden.

Die Prüfvorrichtung stellt insgesamt eine Signalschleife dar, die den Weg der von einem SAR-Radarsender zu einem Punktziel oder einer Summe von Punktzielen ausgehenden und von einem SAR-Radarempfänger empfangenen Impulse unter Ausschluß der Antenne des SAR-Radargerätes nachbildet. Diese Signalschleife besteht nach einem Zirkulator, welcher die aus- und einlaufenden Impulse bzw. Signale am Eingang des SAR-Radargerätes vereinigt, aus einem Vortwärtszweig, der durch eine mehrfach angezapfte Laufzeitkette die unterschiedlichen Laufzeiten nachbildet und einem Rückwärtszweig, der in Form einer Sammelschiene die verzögerten Impulse bzw. Signale vereinigt. Beide Zweige sind an ihren Enden mit ihren Wellenwiderständen abgeschlossen. Zwischen den beiden Zweigen ist eine Kreuzschienenmatrix angeordnet, auf der als Steckmodule ausgebildete Punktzielsimulatoren (Punktzielmodule) aufsteckbar sind. Die auf der Kreuzschienenmatrix aufsteckbaren Punktzielmodule vermitteln hinsichtlich ihrer Lage in der Matrix ein visuelles Abbild eines Punktzielmusters im Zielgebiet eines SAR-Radargerätes, das während des Prüfvorganges nachgebildet werden soll. Die zeitlichen Verzögerungen, welche durch die Eigenbewegung eines SAR-Radargerätes und das zeitverschobene Eintreten der Punktziele in das Blickfeld des SAR-Radargerätes bedingt sind, werden durch eine programmierbar digitale Zählerkette bewirkt. Durch Anordnung von mehreren Eingängen an der Prüfvorrichtung ist es möglich, SAR-Radargeräte mit verschiedenen Betriebsfrequenzen anzuschließen.

Zur Simulation von Störeinflüssen bzw. -signalen, z. B. Hintergrundrauschen (Clutter), Phasen- und Amplitudenfluktuation (Speckle) und Laufzeitfehlern sind wenigstens zwei Rauschquellen (Rauschgeneratoren) oder Quellen mit quasistochastischen Signalen vorgesehen. Dadurch, daß alle die die Nachbildungen der Signaleigenschaften bewirkenden und Störgrößen simulierenden Bauelemente in kalibrier- bzw. eichfähiger Art hinsichtlich Einstell- und Ablesbarkeit, Konstanz und Präzission ausgeführt sind, ist die Prüfvorrichtung auch zu Eichzwecken eines SAR-Radargerätes verwendbar. Eine künstliche räumliche Vergrößerung eines simulierten bzw. nachgebildeten Zieles wird durch in den Punktzielmodulen vorgesehene elektronische Hilfsmittel, z. B. durch nachhallerzeugende Glieder bewirkt. Ferner ermöglicht eine in der Kreuzschienenmatrix angeordnete besondere vertikale Schiene bzw. Leitung die Erzeugung eines Graukeils, wobei auf diese Schiene bzw. Leitung eine Reihe von Punktzielsimulatoren mit abgestuften Dämpfungen aufgeschaltet sind.

Ausführungsbeispiele sind folgend beschrieben und durch Skizzen erläutert.

Es zeigen :

Figur 1   ein Prinzipschaltbild einer Prüfvorrichtung für ein SAR-Radargerät,

Figur 2a, b, c   prüfrelevante Gegebenheiten während des Betriebes eines SAR-Radargerätes,

Figur 3   ein Schaltbild gemäß Fig. 1 näher dargestellt,

Figur 4   ein Punktzielmodul gemäß Fig. 3 in Einzeldarstellung,

Figur 5   ein Frequenzschema der Prüfvorrichtung.

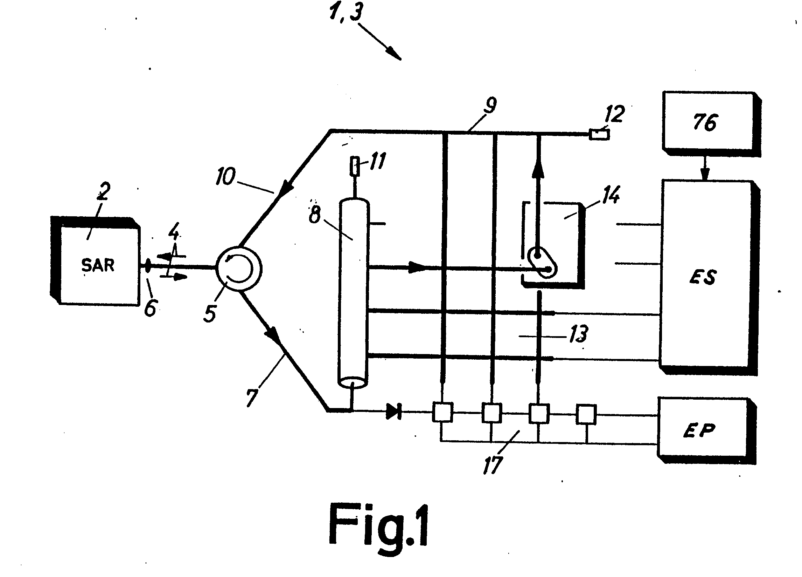

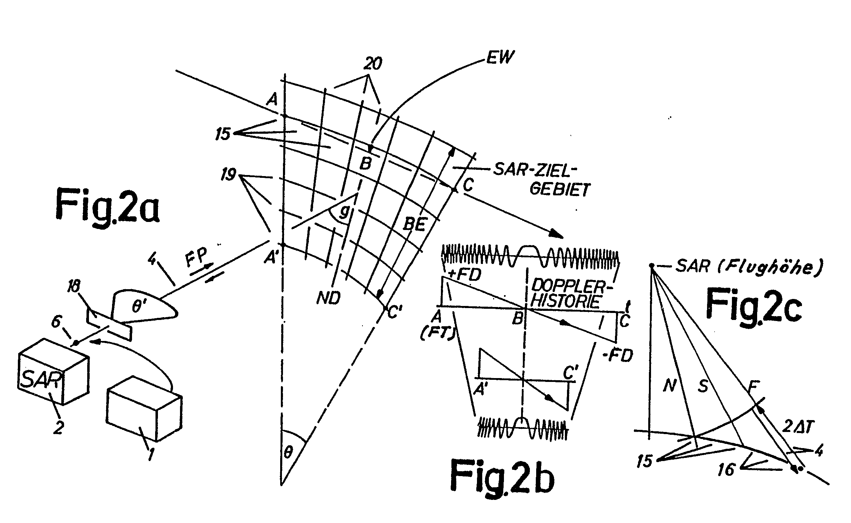

Aus Fig. 1 ist ein Prinzipschaltbild einer Prüfvorrichtung 1 für ein SAR-Radargerät 2 (Fig. 2a) ersichtlich. Die Prüfvorrichtung 1 stellt insgesamt eine Signalschleife 3 dar, welche den Weg der von einem SAR-Sender (dem SAR-Radargerät mit Antenne) zu einem Punktziel oder einer Summe von Punktzielen (Fig. 2c) ausgehenden und in einem SAR-Empfänger eingehenden Impulse bzw. Signale 4 (Fig. 2a und 2c) unter Ausschluß bzw. Übergehung einer SAR-Antenne (Fig. 2a) nachbildet bzw. simuliert. Nach einem am einen Ende der Signalschleife 3 angeordneten Zirkulator 5, welcher die aus- und einlaufenden Impulse bzw. Signale 4 an der Eingangsbuchse bzw. am Antennenanschluß 6 (auch Fig. 2a) vereinigt, besteht die Signalschleife 3 aus einem Vorwärtszweig 7, welcher die unterschiedlichen Laufzeiten der Impulse bzw. Signale 4 durch eine mehrfach angezapfte Laufzeitkette 8 nachbildet und einem, in Form einer Sammelschiene 9 die verzögerten Impulse bzw. Signale 4 vereinigenden Rückwärtszweig 10. Beide Zweige 7 und 10 sind mit ihren Wellenwiderständen 11, 12 abgeschlossen. Zwischen den beiden Zweigen 7 und 10 ist eine Kreuzschienenmatrix 13 angeordnet, auf welcher als Steckmodule ausgebildete Punktzielsimulatoren (Punktzielmodule) 14 aufsteckbar sind. Die so auf der Kreuzschienenmatrix 13 aufgesteckten Punktzielmodule 14 vermitteln hinsichtlich ihrer Lage in der Matrix ein visuelles Abbild eines Punktzielmusters 15 in einem SAR-Zielgebiet (Fig. 2a, 2c), das während des Prüfvorganges nachgebildet bzw. simuliert werden soll. Zeitliche Verzögerungen, welche durch die Eigenbewegung des SAR-Radargerätes 2 und das zeitverschobende Eintreten der nahesten und fernsten Punktziele 15, 16 (Fig. 2c) in das Blickfeld des SAR-Radargerätes 2 bedingt sind, werden durch eine programmierbare digitale Zählerkette 17 bewirkt.

Aus den Fig. 2a, 2b, 2c sind prüfrelevante Gegebenheiten des Betreibes eines SAR-Radargerätes 2 in einer bestimmten Flughöhe ersichtlich. Ein durch die Eigenschaften der SAR-Antenne 18 (Fig. 2a) momentan unter einem mittleren Einfallswinkel g erfaßtes Blickfeld ist durch Linien gleicher Entfernung 19 und Linien gleicher Dopplerverschiebung 20 quasi-orthogonal als SAR-Zielgebiet unterteilt. Ein Punktziel 15, welches durch die Bewegung eines SAR-Trägers (in den Fig. nicht gezeigt) dieses Blickfeld bzw. den Sichtbereich von A nach C durchläuft (siehe auch Richtungspfeil in Fig. 2a), ändert seinen relativen Abstand zum SAR-Radargerät in einer Entfernungswanderung um den Betrag EW. Beim Eintritt des Punktzieles 15 in den Sichtbereich der SAR-Antenne 18 (bei A) ist die Frequenz des rückgestreuten Impulses bzw. Signales FT (Fig. 2b) um eine positive maximale Dopplerverschiebung + FD gegen die ausgestrahlte SAR-Trägerfrequenz FT versetzt (auflaufendes Ziel). Bei der Wanderung des Punktzieles 15 in die Blickfeld-bzw. Sichtbereichsmitte B nimmt die Dopplerverschiebung auf Null ab (Null-Doppler ND), um bei C das Blickfeld bzw. den Sichtbereich des SAR-Radargerätes 2 bzw. seiner Antenne 18 mit maximaler negativer Dopplerverschiebung — FD wieder zu verlassen (ablaufendes Ziel) und wonach seine Dopplerhistorie im SAR-Radargerät 2 vollendet ist (Fig. 2b). Ein zum SAR-Radargerät 2 näheres Ziel durchläuft an der unteren Grenze des Blickfeldes bzw. Sichtbereiches zwischen A' und C' die annähernd gleiche Dopplerhistorie von + FD nach — FD in kürzerer Zeit (Fig. 2a, 2b). Die Zeiten für Dopplerhistorien ferner und naher Ziele werden bestimmt durch die Eigengeschwindigkeit des SAR-Radargerätes 2 bzw. seines Trägers, die Projektion ⊗ des azimutalen Antennenöffnungswinkels ⊖' auf die Zielebene A, A', C, C' und den Entfernungsbereich BE (siehe Pfeilrichtung). Auf dem Wege von der SAR-Antenne 18 zu den Punktzielen 15, 16 (Fig. 2a, 2c) und zurück, erfahren die höchstfrequenten SAR-Impulse bzw. Signale 4 eine erhebliche Streckendämpfung und Laufzeitverzögerung.

Für eine an der Eingangsbuchse bzw. am Antennenanschluß 6 angeschlossene Prüfvorrichtung 1 sind folgende nachzubildende bzw. zu simulierenden Signaleigenschaften maßgebend :

— die Streckendämpfung der zu den Punktzielen 15 bis 16 ausgehenden und zurückkehrenden Impulse bzw. Signale 4

— die daraus resultierenden Laufzeiten, von welchen nur der in Fig. 2c mit 2 ΔT bezeichnete Anteil nachgebildet bzw. simuliert wird, weil die für nahe (N) und ferne (F) Punktziele 15, 16 gleichen Anteile für den Prüfvorgang belanglos sind

— die Dopplerhistorie (Fig. 2b)

— die Entfernungswanderung EW

— der Radarrückstrahlquerschnitt (nicht darstellbar) der Punktziele 15 bis 16.

Ferner sind zur Durchführung eines Prüfvorganges die folgenden fünf Größen einmalig manuell an der Prüfvorrichtung einzustellen :

— die Impuls- bzw. Signaldämpfung ; sie ist mitbedingt durch die mittlere Schrägentfernung S

— die Sendeleistung

— die Empfangsempfindlichkeit

3

— die Zeit t für die Dopplerhistorie für die mittlere Schrägentfernung S

— die Anzahl der während einer Dopplerhistorie von einem Einzelziel reflektierten Impulse bzw. Signale

— eine zu wählende Anzahl von Impulsen bzw. Signalen und damit einen Zeitversatz, um die später in das SAR-Zielgebiet einlaufenden Punktziele gegenüber früher einlaufenden versetzt sein sollen.

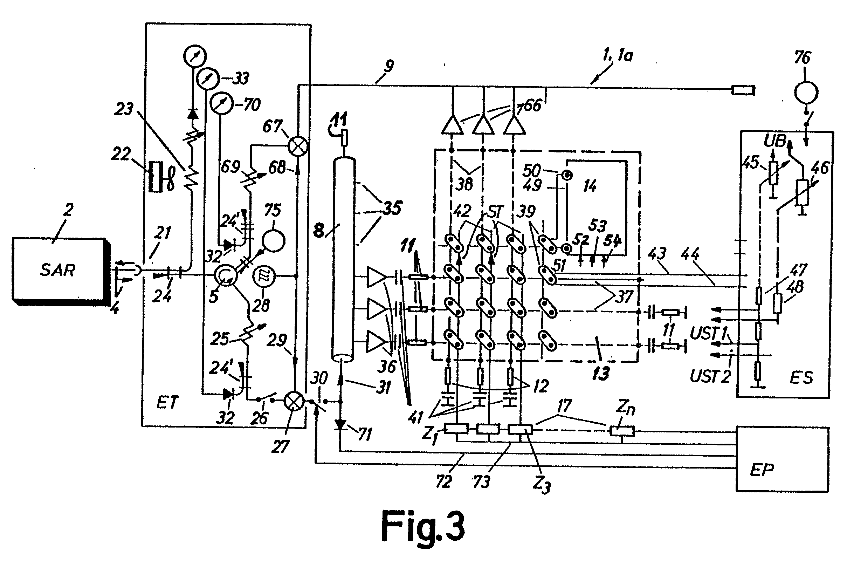

In Fig. 3 ist das aus Fig. 1 ersichtliche Prinzipschaltbild der Signalschleife 3 einer Prüfvorrichtung 1 als elektronisches Schaltbild 1a näher dargestellt. Die vom SAR-Radargerät 2 ausgehenden hochfrequenten Impulse bzw. Signale 4 gelangen zunächst über eine an der Prüfvorrichtung 1 (bzw. 1a) vorgesehene Eingangsbuchse 21 in den für die jeweilige Betriebsfrequenz des SAR-Radargerätes 2 spezifisch ausgelegten Eingangsteil ET der Prüfvorrichtung 1 ein. Der größte Teil der Sendeleistung, die im Bereich von einigen Watt bis etwa einem Kilowatt liegt, wird in einem von einem Gebläse 22 gekühlten Abschlußwiderstand 23 vernichtet. Ein Teilbetrag dieser Leistung wird über einen ca. 20 dB-Richtkoppler 24 ausgekoppelt und über den Zirkulator 5 (auch Fig. 1), einen einstellbaren Abschwächer 25 und einen Schalter 26 auf einen Mischer 27 geleitet. Hier wird der Teilbetrag mittels einer von einem Hauptoszillator 28 erzeugten Hilfsfrequenz 29 in eine erste Zwischenfrequenzlage 31 von ca. 60 MHz abgemischt. Die Leistung des am Abschwächer 25 eingestellten Teilbetrages ist über einen Richtkoppler 24' von ca. 10 dB und einen Gleichrichter 32 an einem Anzeigeinstrument 33 anzeigbar und kontrollierbar. Die abgemischten Impulse bzw. Signale gelangen über den Schalter 30 an eine angezapfte Verzögerungsleitung 8, wodurch sie um den Anteil 2 ΔT (Fig. 2c) der Vor-/Rücklaufzeiten, die die SAR-Impulse bzw. Signale 4 im realen Betrieb erfahren, verzögert werden. Die Verzögerungsleitung 8 ist durch eine mit Abgriffen 35 versehene Kette von (gegebenenfalls anzapfbaren) interdigitalen Filtern in der Technologie von akustischen Oberflächenwellenfiltern realisierbar. Die insgesamt aufzubringenden Verzögerungszeiten liegen dabei sowohl für Flugzeug- als auch für Satelliten-SAR-Radargeräte im Bereich von 500 Mikrosekunden. Nach äquidistanten Teilverzögerungen, welche durch die Wahl der Abgriffe 35 an der Verzögerungsleitung 8 festlegbar sind, und Pegelausgleich durch eine Reihe von Verstärkern 36 werden die Impulse bzw. Signale auf die Hochfrequenzschienen 37 (z. B. horizontale Anordnung in Fig.) der Kreuzschienenmatrix 13 geführt, die somit ein Entfernungsraster im Sichtbereich A-C (Fig. 2a) eines SAR-Radargerätes 2 nachbilden bzw. simulieren. Zu den Hochfrequenzschienen 37 vertikal angeordnete Hochfrequenzschienen 38 in der Kreuzschienenmatrix 13 bilden ein Zeitraster für die Eigenbewegung des SAR-Radargerätes 2 nach. Dazu werden in den Kreuzungspunkten der Hochfrequenzschienen 37 und 38 Punktzielsimulatoren bzw. Punktzielmodule 14 eingesteckt. Dabei bestimmt der Einsteckort der Punktzielmodule 14 in der Kreuzschienenmatrix 13 für den den Prüfvorgang Ausführenden in anschaulicher Art die Lage von früher oder später und in verschiedenen Entfernungen in den Sichtbereich A-C eines SAR-Radargerätes 2 eintretenden Zielpunkten 15 bis 16.

Durch Einstecken eines Punktzielmoduls 14 wird ein von einer Hochfrequenzschiene 37 (horizontale Anordnung) in der 60 MHz-Lage einlaufender Impuls (Signal) in eine 110 MHz-Lage aufgemischt und auf eine der Hochfrequenzschienen 38 (vertikale Anordnung) durchgeschaltet. Alle Hochfrequenzschienen 37 und 38 der Kreuzschienenmatrix 13 sind zur Vermeidung von Resonanzen mit ihren Wellenwiderständen 11, 12 abgeschlossen und diese gegen Gleichstrom durch Kondensatoren 41 verriegelt. Parallel zu den Hochfrequenzschienen 38 (vertikal) verlaufen Hilfsschienen 42, die ein Zeitsignal (Zählersignal) ST von der Zählerkette 17 (auch Fig. 1) zu den Kreuzungspunkten 39 führen. Parallel zu den Hochfrequenzschienen 37 (horizontal) verlaufen je zwei Hilfsschienen 43, 44, die zwei Steuersignale UST1, UST2 von einer benachbarten Steuereinheit ES an die Kreuzungspunkten 39 führen. Die Steuersignale UST1 und UST2 werden in der Steuereinheit ES von einer Betriebsspannung UB abgeleitet und an Potentiometern 45 und 46 für alle Hilfsschienen 43 und 44 eingestellt und durch Teilerketten 47 und 48 abgestuft abgegriffen. Dadurch werden der azimutale Antennenöffnungswinkel Θ' und der Einfallswinkel g (Fig. 2a) nachgebildet.

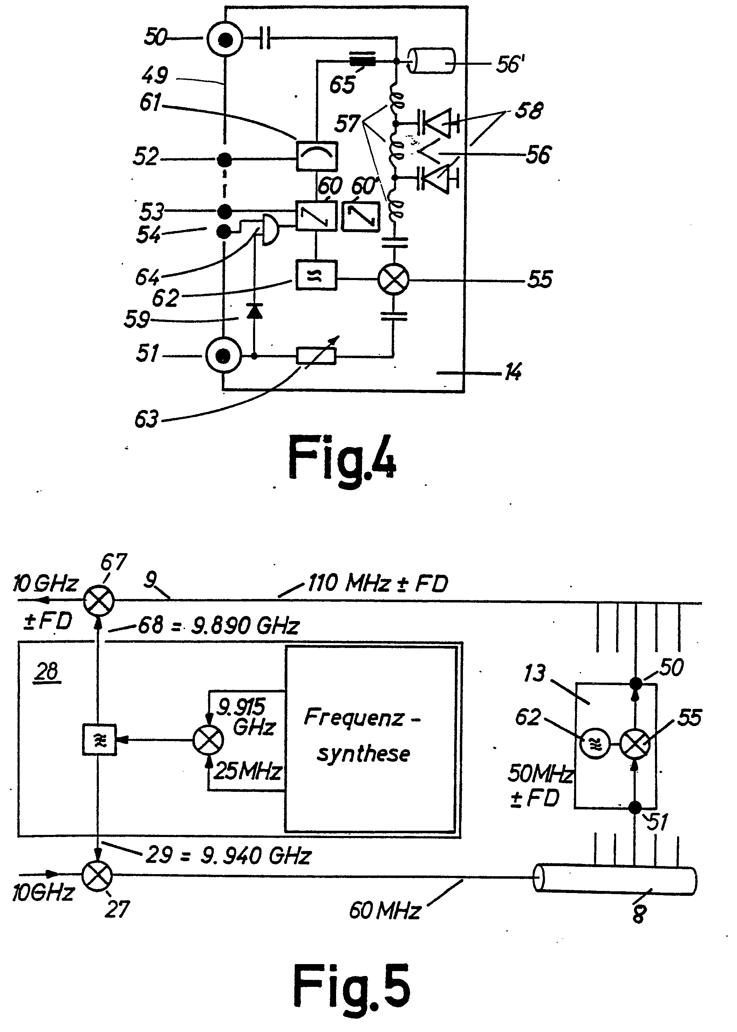

In Fig. 4 ist ein gemäß Fig. 3 in der Kreuzschienenmatrix 13 ersichtliches Punktzielmodul 14 detailiert dargestellt. Am Punktzielmodul 14 ist eine Steckerleiste 49 angeordnet, welche fünf Steckbuchsen 50, 51, 52, 53, 54 aufweist und wovon die Ein- und Ausgangsbuchsen 50 und 51 koaxial ausgebildet sind. Das Punktzielmodul 14 ist mittels dieser Steckerleiste 49 auf die Kreuzschienenmatrix 13 aufgesteckt und durch die Steckerbuchsen 50, 51, 52, 53, 54 mit den Hochfrequenzschienen 37, 38 und Hilfsschienen 42, 43, 44 elektrisch verbunden (Fig. 3). Das Punktzielmodul 14 enthält als funktionsbestimmende Komponenten einen Mischer 55, eine spannungsgesteuerte Laufzeitkette 56, bestehend aus drei Induktivitäten 57 und zwei Varaktordioden 58, eine Diode 59, zwei Rampengeneratoren 60, 60', einen Spannungsgesteuerten Kurvengenerator 61, einen spannungsgesteuerten Quarzfrequenzgenerator bzw. Doppler-Oszillator 62 und einen einstellbaren Abschwächer 63.

Ein über die Eingangsbuchse 51 einlaufender Impuls bzw. einlaufendes Signal von ca. 60 MHz wird an die Diode 59 detektiert und setzt in Koinzidenz mit einem an der Steckerbuchse 54 stehenden Zeit- bzw. Zählersignal ST an einem Undgatter 64 den Startzeitpunkt für den Rampengenerator 60. Die Zeitdauer zum Durchlaufen der Rampe und damit der Dopplerhistorie wird dem Rampengenerator 60 über die Steckerbuchse 53 und in Form der Gleichspannung des Steuersignals UST1 (Fig. 3) zugeführt. Die zweite Gleichspannung des Steuersignals UST2 (Fig. 3), eingehend über die Steckerbuchse 52, bestimmt den Spannungshub des Kurvengenerators 61. Die Kurvenspannung ist in ihrem zeitlichen Verlauf synchron mit der Dopplerhistorie, wobei ihr zeitlicher Ablauf vom Rampengenerator 60 abgeleitet wird. Die Kurvenspannung selbst wird über eine HF-Drossel 65 der Laufzeitkette 56 zugeführt, wo sie die Nachbildung bzw. Simulation der Entfernungswanderung EW (Fig. 2a) bewirkt. Der Rampengenerator 60 steuert mit seiner Rampenspannung die Verstimmung des Quarzfrequenzgenerators bzw. Doppler-Oszillators 62 um den Betrag der Dopplerverschiebung ± FD (Dopplerhistorie). Die Mittenfrequenz des Quarzoszillators 62 liegt bei ca. 50 MHz. Das Signal 50 MHz ± FD wird dem Mischer 55 zugeführt.

Die Amplitude des einlaufenden SAR-Impulses bzw. Signals 4 (Fig. 1, 2a, 3) wird dabei am Abschwächer 63 so eingestellt, wie es dem Rückstreuquerschnitt des nachzubildenden Punktzieles 15 bzw. 16 entspricht. Der SAR-Impuls 4 wird danach mit der Augenblicksfrequenz des Quarzoszillators 62 zu einem 110 MHz-Impuls aufgemischt, das den Augenblickswert der Dopplerhistorie enthält. Dieser Impuls bzw. Dieses Signal wird dabei um einen durch den Kurvengenerator 61 bestimmten Augenblickswert der Entfernungswanderung EW (Fig. 2a) in der Laufzeitkette 56 verzögert, wobei die frequenzselektive Eigenschaft der Laufzeitkette 56 das unerwünschte Mischprodukt von ca. 10 MHz verriegelt.

Der in der beschriebenen Form aufbereitete 110 MHz ± FD-Impuls wird über die koaxiale Ausgangsbuchse 50 in die Kreuzschienenmatrix 13 zurückgeleitet (Fig. 3). Nachdem den Impulsen die durch die Wahl der Kreuzungspunkte 39 (Fig. 3) festgelegten Merkmale aurgeprägt wurden, werden sie über die Hochfrequenzschienen 38 und nach Verstärkung in Verstärkern 66 an der Sammelschiene 9 zu einem im Eingangsteil ET weiteren angeordneten Mischer 67 geführt (Fig. 3). Hier werden die Impulse mittels einer vom Hauptoszillator 28 erzeugten zweiten Hilfsfrequenz 68 in die Frequenzlage der SAR-Trägerfrequenz FT zurückgemischt. Der Pegel dieser so aufbereiteten SAR-Empfangs-impulse bzw.-signale 4 wird an einem im Eingangsteil ET angeordneten zweiten Abschwächer 69 im Zusammenwirken mit der weiteren Abschwächung an einem zweiten Richtkoppler 24' auf einen gewünschten Wert (im Bereich von ca.-115 dBW, als typischer Wert) eingestellt und an einem weiteren Anzeigeinstrument 70 kontrolliert. Der Hauptoszillator 28 liefert nach bekannter Technik der Frequenzsynthese die beiden hinsichtlich einer gemeinsamen Grundfrequenz kohärenten Hilfsfrequenzen 29 und 68 von mindestens gleicher Frequenzkonstanz C wie die SAR-Trägerfrequenz FT, also von etwa $C = 1 \cdot 10^{-7}$ bis $10^{-8}$. Das Frequenzschema der Prüfvorrichtung 1 ist aus Fig. 5 ersichtlich und für ein Beispiel von FT = 10 GHz und eine Impulsbandbreite von kleiner/gleich 5 MHz angegeben. An den Doppler-Oszillator 62 sind keine Kohärenzbedigungen gestellt.

Die die Eigenbewegung des SAR-Radargerätes 1 (Fig. 1, 3) simulierenden Zeit- bzw. Zählersignale ST werden von einer Programmeinheit EP und einer Zählerkette 17 in bekannter Digitaltechnik erzeugt. Durch Schliessen der Schalter 26 und 30 beginnt der Prüfablauf. Dabei wird über eine Diode 71 das Eintreffen des ersten Impulses detektiert und über eine Leitung 72 der Programmeinheit EP gemeldet. Über eine Leitung 73 werden die Zähler $Z_1$ bis $Z_n$ der Zählerkette 17 auf eine beliebige Zahl Q = NP : M gesetzt, von der sie nacheinander im Takt der Pulsfolgefrequenz FP bis Null abwärtszählen. Dabei beendet die Zahl Null am Zähler $Z_n$ den Prüfzyklus und die Zahl M (gewählt) bestimmt zusammen mit der Pulsfolgefrequenz FP die zeitlichen Abstände der auf den Hilfsschienen 42 gesetzten Punktziele 15 bzw. 16 (Fig. 2a, 2c). Beim Start des Zählvorganges am Zähler $Z_3$ gibt dieser ein Signal « logisch 1 » für die Dauer eines Pulsfolgeintervalls 1 : FP auf die ihm zugeordnete Hilfsschiene 42 und damit auf den Eingang des Undgatters 64 in einem Punktzielmodul 14 auf dieser Schiene (Fig. 3 und 4). Die Koinzidenz der im Punktziel 15 bzw. 16 einlaufenden Impulse bzw. Signale 4 mit dem Zeitsignal ST initiiert dort die beschriebenen Abläufe. Der Prüfzyklus ist durch manuelles Schliessen des Schalters 30 wiederholbar.

Die Rampenspannung eines zusätzlich im Punktzielmodul 14 angeordneten Rampengenerators 60' kann der Rampenspannung des Rampengenerators 60 wahlweise überlagert werden. Dadurch wird der ursprünglich durch die Steuereinheit ES vorgeschriebene zeitliche und amplitudenmäßige Verlauf der Steuerspannung des spannungsgesteuerten Doppleroszillators 62 in dem betreffenden Punktzielmodul 14 zo verändert, daß das hierdurch dargestellte Einzelziel eine Bewegung im SAR-Bild vortäuscht.

Eine in Fig. 4 als koaxiale Reflexionsleitung angedeutete Echoleitung 56' bewirkt einen Nachhall des Impulses und damit eine scheinbare Vergrößerung des Punktziels.

Zwei Generatoren 75 und 76 (Fig. 3) erzeugen Rausch- bzw. quasi-stochastische Signale. Generator 75 bewirkt Hintergrundrauschen (Clutter) im SAR-Bild. Mit einem Störsignal bzw. einer Störgröße des Generators 76 sind Fluktuationen in der Zielabbildung erreich- bzw. bewirkbar, wenn diese Störgröße den Signalen UST1 und/oder UST2 überlagert werden.

## Patentansprüche

1. Prüfvorrichtung (1) für ein Radargerät mit synthetischer Apertur (SAR) mit Ein- und Ausgangsanschluß (6), dadurch gekennzeichnet, daß von einem SAR-Radargerät (2) ausgehende Impulse bzw. Signale (4) über eine zwischen Ein- und Ausgangsanschluß (6) angeordnete Signalschleife (3) unter Ausschluß eine SAR-Antenne (18) nachgebildet werden, wobei die Eingangsbuchse (6) mit einem in der Signalschleife (3) integrierten Zirkulator (5) elektrisch verbunden wird, der die am SAR-Radargerät (2) ein- und auslaufenden Impulse bzw. Signale (4) danach vereinigt, daß die Signalschleife (3) aus einem mittels einer mehrfach angezapften Laufzeitkette (8) unterschiedliche Laufzeiten nachbildenden Vorwärtszweig (7) und einem in Form einer Sammelschiene (9) die verzögerten Impulse bzw. Signale (4) vereinigenden Rückwärtszweig (10) besteht, wobei zwischen Vorwärts- und Rückwärtszweig (7, 10) eine Kreuzschie-

nenmatrix (13) angeordent ist, auf die als Steckmodule ausgebildete und als Punktzielsimulatoren arbeitende Punktzielmodule (14) aufsteckbar sind, und daß beide Zweige (7, 10) an ihren Enden mit ihren Wellenwiderständen (11, 12) abgeschlossen sind.

2. Prüfvorrichtung nach Anspruch 1, dadurch gekennzeichnet, daß mehrere Eingangsanschlüsse (21) vorgesehen sind, denen jeweils verschiedene betriebsfrequenzgebundene Eingangsteile zugeordnet sind, die jeweils von den Impulsen bzw. Signalen (4) mehrerer daran angeschlossener SAR-Radargeräte (2) mit verschiedenen Betriebsfrequenzen durchlaufen werden.

3. Prüfvorrichtung nach den Ansprüchen 1 und 2, dadurch gekennzeichnet, daß nach einer jeweils notwendigen Abschwächung (24) der verschiedenen Eingangssignale, diese mittels verschiedener Mischer (27, 55, 67) in stets die gleichen Zwischenfrequenzlagen abgemischt und nach Verzögerung und Dopplermodulation wieder in die Ausgangsfrequenzlage zurückgemischt werden.

4. Prüfvorrichtung nach den Ansprüchen 1 und 2, dadurch gekennzeichnet, daß zur Ab- und Zurückmischung der Eingangssignale (4) in die Zwischenfrequenz (31) und zurück in die Ausgangsfrequenz (FT) zwei breitbandige Mischer (27, 67) und ein umschaltbarer Lokal- oder Hilfsoszillator (28) vorgesehen ist.

5. Prüfvorrichtung nach den Ansprüchen 1 bis 4, dadurch gekennzeichnet, daß wenigstens zwei Rauschquellen, z. B. Rauschgeneratoren oder Quellen mit quasistochastischen Signalen (75, 76) vorgesehen sind.

6. Prüfvorrichtung nach den Ansprüchen 1 bis 5, dadurch gekennzeichnet, daß in den Punktzielmodulen (14) nachhallerzeugende elektronische Glieder (56') vorgesehen sind.

7. Prüfvorrichtung nach den Ansprüchen 1 bis 6, dadurch gekennzeichnet, daß in der Kreuzschienenmatrix (13) eine besondere vertikale Schiene bzw. Leitung zur Erzeugung eines Graukeils vorgesehen ist.

8. Prüfvorrichtung nach den Ansprüchen 1 bis 7, gekennzeichnet durch einen zusätzlichen Rampengenerator (60), dessen Ausgangsspannung der Rampenspannung der Rampengeneratoren der Punktzielmodule (14) in der Weise überlagert wird, daß die Rampenspannung ein Abweichen der Dopplerhistorie eines nachgeordneten spannungsgesteuerten Quarzfrequenzgenerators (62) von einem vorgeschriebenen Muster derart bewirkt, daß anstelle eines ruhenden Punktzieles (15 bzw. 16) ein bewegtes Ziel nachgebildet wird.

9. Prüfvorrichtung nach den Ansprüchen 1 bis 8, dadurch gekennzeichnet, daß die Kreuzschienenmatrix (13) durch eine rechnergesteuerte Schaltmatrix ersetzbar ist und dadurch die Operationen eines Prüf- oder Eichvorganges auf einem Bildschirm kontrollierbar sind.

**Claims**

1. A testing device (1) for a radar with synthetical aperture (SAR) with input and output connection (6) thereby characterized, that impulses or signals (4) respectively emanating from a SAR-radar (2) are reproduced via a signal loop (3) positioned between the input and output connection (6) excluding a SAR-antenna (18) whereby the input socket (6) is connected electrically with a circulator (5) integrated in the signal loop (3) which so combines the impulses or signals (4) respectively incoming to or outgoing from the SAR-radar (2) that the signal loop (3) consists of a forward branch (7) reproducing differing pulse timings by means of a multiply tapped delayline network (8), and a backward branch (10) formed as a collecting bar (9) combining the delayed impulses or signals (4) respectively, where by a cross-bar matrix (13) is placed between forward and backward branch (7, 10) on which pin-point target matrix (14) formed as plug modules and working as point target simulators are attacheable, and that both branches (7, 10) are terminated by their wave resistors (11, 12) at their ends.

2. Testing device according to claim 1, thereby characterized that several input connections (21) are providet, to which different input parts fied to the operating frequency are coordinated each which are being travelled through by the impulses or signals (4) respectively of several SAR-radars (2) connected thereto with different operating frequencies.

3. Testing device according to claim 1 and 2, thereby characterized that after a necessary attenuation (24) of the different input signals these are mixed in always the same intermediate-frequency layers by means of different mixers (27, 55, 67), and are mixed back to the output frequency layer after a delay and Doppler-modulation.

4. Testing device according to claims 1 and 2, thereby characterized that two wide-banded mixers (27, 67) and a switchable local-or auxiliary oscillator (28) are provided for the mixing and backmixing of the input signals (4) into the intermediate frequency (31) and back into the output frequency (FT).

5. Testing device according to claims 1 to 4, thereby characterized that a least two noise sources, for example noise generators or sources with quasistochastic signals (75, 76) are provided.

6. Testing device according to claims 1 to 5, thereby characterized that reverberation generating electronical circuits (56') are provided in the point target moduls (14).

7. Testing device according to claims 1 to 6, thereby characterized that a particular vertical bar or lead respectively is provided in the cross-bar matrix (13) for production of a grey wedge.

8. Testing device according to claims 1 to 7, characterized by an additional ramp generator (60)

6

whose output voltage of the ramp voltage of the ramp generators of the point target modules (14) is being jammed in this manner, that the ramp voltage couses a deviation of the Doppler-history of a subordinated voltage controlled quartz frequency generator (62) from a specified pattern so, that a moving target is reproduced instead of a static point target (15 or 16).

9. Testing device according to claims 1 to 8, thereby characterized that the cross-bar matrix (13) is replaceable by a computer controlled switch matrix and thereby the operations of a testing or standardized process can be controlled on a screen.

**Revendications**

1. Dispositif d'essai (1) pour radar à ouverture synthétique (SAR), comprenant un raccord d'entrée et de sortie (6), caractérisé en ce que des impulsions ou signaux (4) partant d'un radar SAR (2) sont simulés au moyen d'une boucle à signaux (3) disposée entre le raccord d'entrée et de sortie (6), en excluant une antenne SAR (18), la prise d'entrée (56) étant reliée électriquement à un circulateur (5) intégré dans la boucle à signaux (3), qui réunit ensuite les impulsions ou signaux (4) incidents et sortant du radar SAR (2), en ce que la boucle à signaux (3) est constituée par une branche aller (7) simulant les durées de propagation différentes au moyen d'une ligne à retard (8) à prises multiples, et par une branche de retour (10) qui réunit les impulsions ou signaux retardés (4) par une barre omnibus collectrice (9), une matrice crossbar (13) étant disposée entre les branches d'aller et de retour (7, 10), sur laquelle peuvent être enfichés des modules de cibles ponctuelles (14) fonctionnant en tant que simulateurs de cibles ponctuelles et constitués sous forme de modules enfichables, et en ce que les deux branches (7, 10) sont fermées à leurs extrémités par leurs impédances caractéristiques (11, 12).

2. Dispositif d'essai selon la revendication 1, caractérisé par le fait que sont prévus plusieurs raccords d'entrée (21) auxquels sont respectivement associées diverses sections d'entrée liées à la fréquence de fonctionnement, qui sont traversées chaque fois par les impulsions ou les signaux (4) de plusieurs radars SAR (2) raccordés à ces derniers et de fréquences de fonctionnement différentes.

3. Dispositif d'essai selon la revendication 1 ou 2, caractérisé par le fait qu'après une atténuation à chaque fois nécessaire (24) des divers signaux d'entrée, ces derniers sont mélangés par différents mélangeurs (27, 65, 67) toujours dans les mêmes positions de fréquence intermédiaires et sont re-mélangés dans la position de fréquence de départ après retard et modulation Doppler.

4. Dispositif d'essai selon la revendication 1 et 2, caractérisé par le fait qu'on prévoit pour la séparation et le re-mélange des signaux de départ (4) dans la fréquence intermédiaire (31) et en retour dans la fréquence de départ (FT) deux mélangeurs à large bande (27, 67) et un oscillateur auxiliaire ou local inversable (28).

5. Dispositif d'essai selon l'une quelconque des revendications 1 à 4, caractérisé par le fait que sont prévues au moins deux sources de bruits, telles que des générateurs de bruit ou des sources à signaux quasi-aléatoires (75, 76).

6. Dispositif d'essai selon l'une quelconque des revendications 1 à 5, caractérisé par le fait que sont prévus dans les modules de cibles ponctuelles (14) des éléments électroniques (56') créant un écho artificiel.

7. Dispositif d'essai selon l'une quelconque des revendications 1 à 6, caractérisé par le fait que sont prévus dans la matrice crossbar (13) une barre omnibus ou un conducteur vertical particulier pour créer un coin gris.

8. Dispositif d'essai selon l'une quelconque des revendications 1 à 7, caractérisé par un générateur de rampe additionnel (60), dont la tension de sortie est superposée à la tension de rampe du générateur de rampe du module de cible ponctuelle (14) de manière que la tension de rampe détermine un affaiblissement de l'historique Doppler d'un générateur de fréquence à quartz (62) commandé par la fréquence et monté à l'aval, selon un motif prescrit, de manière que soit simulée une cible mobile à la place d'une cible ponctuelle immobile (15 ou 16).

9. Dispositif d'essai selon l'une quelconque des revendications 1 à 8, caractérisé par le fait que la matrice crossbar (13) peut être remplacée par une matrice de commutation commandée par des calculateurs et en ce que les opérations d'un processus d'essai ou d'étalonnage sont ainsi contrôlables sur un écran.

Fig.1

**Fig.2a**

**Fig.2b**

**Fig.2c**

**Fig.3**

0 061 559

**Fig.4**

**Fig.5**